# EUROPÄISCHE PATENTSCHRIFT

(11) **EP 3 475 108 B1**
(45) Veröffentlichungstag und Bekanntmachung des Hinweises auf die Patenterteilung: **19.01.2022**
(21) Anmeldenummer: 17732105.6
(22) Anmeldetag: 22.06.2017
(51) Int. Cl.: B60J 1/20

(54) **ROLLOANORDNUNG FÜR EINE FAHRZEUGKAROSSERIE UND VERFAHREN ZUM ZUSAMMENBAU DER ROLLOANORDNUNG**
ROLLER BLIND ASSEMBLY FOR A VEHICLE BODY, AND METHOD FOR ASSEMBLING THE ROLLER BLIND ASSEMBLY
SYSTÈME DE STORE POUR UNE CARROSSERIE DE VÉHICULE ET PROCÉDÉ DE MONTAGE DUDIT SYSTÈME DE STORE

(30) Priorität: 27.06.2016 DE 102016111695
(43) Veröffentlichungstag der Anmeldung: 01.05.2019
(73) Patentinhaber: Webasto SE, 82131 Stockdorf (DE)
(72) Erfinder: STEINER, Erwin, 82131 Stockdorf (DE)
(74) Vertreter: Schwan Schorer & Partner mbB
(86) Internationale Anmeldenummer: PCT/EP2017/065391
(87) Internationale Veröffentlichungsnummer: WO 2018/001857

(56) Entgegenhaltungen:
- EP-A1- 1 215 063
- EP-A2- 1 787 839
- WO-A1-2013/034630
- DE-A1- 10 231 626
- DE-C- 945 130

## Beschreibung

Die vorliegende Erfindung betrifft eine Rolloanordnung gemäß dem Oberbegriff von Anspruch 1, sowie ein Verfahren zum Zusammenbau der Rolloanordnung und / oder zur Montage der Rolloanordnung an einer Fahrzeugkarosserie gemäß Anspruch 8.

Aus dem Stand der Technik sind Rolloanordnungen für Fahrzeugkarosserien bekannt, siehe z.B. WO2013/034630 A1.

Sie dienen zum Beschatten einer Offnung in der Fahrzeugkarosserie, wie beispielsweise einer Dachöffnung, die mit einem transparenten Deckel fest verschlossen, oder wahlweise öffenbar und verschließbar ist. Solche bekannten Rolloanordnungen weisen eine auf- und abwickelbare Rollobahn auf, die in aufgewickelter Stellung auf einer Wickelrolle gelagert werden kann. Es ist mindestens ein Lagerelement vorgesehen, mittels welchem die Wickelrolle drehbar an der Fahrzeugkarosserie gelagert ist.

Nachteilig an solchen bekannten Rolloanordnungen für Fahrzeugkarosserien ist die Tatsache, dass für unterschiedliche Fahrzeugmodelle jeweils ein fahrzeugspezifisches Lagerelement vorgesehen sein muss, obwohl sich lediglich die Positionierung der Wickelrolle ändert. Da die Lagerelemente komplexe Bauteile sind, sind die zu deren Fertigung notwendigen Werkzeuge relativ aufwändig herzustellen und müssen zusammen mit dem Lagerelement selbst für jedes neue Fahrzeugmodell oder auch für unterschiedliche Varianten eines bestimmten Fahrzeugmodells neu entwickelt werden. Dies führt zu erheblichen Kosten und zu einer komplexen Fertigungslogistik.

Es ist daher eine Aufgabe der vorliegenden Erfindung, ein Verfahren zum Zusammenbau der Rolloanordnung und / oder zur Montage dieser an einer Fahrzeugkarosserie bereitzustellen, welche bzw. welches diese Probleme des Stands der Technik vermeidet.

Diese Aufgabe wird gelöst durch verfahren gemäß Anspruch 1.

Erfindungsgemäß weist das Lagerelement einen standardisierten Abschnitt auf, der zur Verwendung für mehrere unterschiedliche Fahrzeugmodelle ausgebildet ist, sowie einen fahrzeugspezifischen Abschnitt, der zur Verwendung an einem bestimmten der unterschiedlichen Fahrzeugmodelle ausgebildet ist. Der standardisierte Abschnitt zusammen mit dem fahrzeugspezifischen Abschnitt ergeben so ein fahrzeugspezifisches Lagerelement (welches aber noch weitere Bauteile beinhalten kann).

Dies bietet den Vorteil, dass zur Anpassung an ein neues Fahrzeugmodell lediglich der fahrzeugspezifische Abschnitt angepasst werden muss, während der standardisierte Abschnitt beibehalten werden kann. Der Begriff "unterschiedliche Fahrzeugmodelle" kann dabei auch lediglich eine Ausstattungsvariante eines Fahrzeugs sein mit beispielsweise einem anderen Dachhimmel oder einer anderen Größe einer Öffnung im Fahrzeugdach.

Bei einem Verfahren zum Zusammenbau der Rolloanordnung entsprechend der vorliegenden Erfindung oder zur Montage einer solchen Rolloanordnung an einer Fahrzeugkarosserie wird im Zuge des Verfahrens ein fahrzeugspezifischer Abschnitt entsprechend des bestimmten Fahrzeugmodells ausgewählt und mit einem standardisierten Abschnitt kombiniert, um ein fahrzeugspezifisches Lagerelement zu erhalten.

Erfindungsgemäß weist der fahrzeugspezifische Abschnitt eine Aufnahme zur Lagerung der Wickelrolle auf, wobei die Aufnahme die fahrzeugspezifische Positionierung der Wickelwelle relativ zur Fahrzeugkarosserie festlegt. Die fahrzeugspezifische Positionierung der Wickelwelle betrifft insbesondere die Ausrichtung der Wickelwelle in einer vertikalen Richtung, sowie in Fahrzeuglängsrichtung. Der fahrzeugspezifische Abschnitt legt damit fest, wie die Wickelwelle, und insbesondere wie deren Rotationsachse relativ zur Fahrzeugkarosserie angeordnet ist. Durch die Aufteilung des Lagerelements in einen standardisierten Abschnitt und einen fahrzeugspezifischen Abschnitt kann

diese Positionierung der Wickelwelle somit vorgenommen werden, ohne dass das komplette Lagerelement für ein weiteres Fahrzeugmodell neu entwickelt und gefertigt werden muss.

Vorzugsweise weist die Aufnahme zur Lagerung der Wickelrolle einen Lagerzapfen auf. Dieser greift in eine Öffnung in einer Stirnseite der Wickelwelle ein, wobei die Wickelwelle auf dem Lagerzapfen oder zusammen mit diesem drehbar gelagert ist. Bei einer weiteren vorteilhaften Ausgestaltung der vorliegenden Erfindung ist der standardisierte Abschnitt an einer Führungsschiene zur seitlichen Führung der Rollobahn anordbar.

Solche seitliche Führungsschienen dienen dazu, die Rollobahn in ihren Seitenbereichen zu führen, und sie mit einer mechanischen Spannung zu beaufschlagen, damit verhindert wird, dass die Rollobahn im abgewickelten Zustand durchhängt. Der fahrzeugspezifische Abschnitt ist dabei an einer der Führungsschienen in horizontaler Richtung abgewandten Seite des standardisierten Abschnitts an diesem angeordnet.

Bei einer alternativen Ausgestaltung der vorliegenden Erfindung ist der standardisierte Abschnitt an einem Rahmenseitenteil eines rechteckigen Rahmens der Rollobahn anordbar.

Solche Rahmen können vorgesehen sein, um eine Öffnung in der Fahrzeugkarosserie mindestens teilweise zu umgeben. Ein solcher Rahmen kann ebenso wie die vorher erwähnte Führungsschiene Teil eines kompletten Dachmoduls sein, welches neben der Rolloanordnung auch einen transparenten Deckel zum Verschließen der Öffnung in der Fahrzeugkarosserie aufweist. Ein entsprechendes Dachmodul kann komplett vormontiert mit einem fest positionierten oder verlagerbaren Deckel auf den Bereich beispielsweise einer Dachöffnung in einem Fahrzeugdach aufgesetzt werden.

Ist bei der Rolloanordnung eine Rollobahn mit einer Wickelrolle vorgesehen, so weist die entsprechende Rolloanordnung vorzugsweise zwei Lagerelemente auf, welche die Wickelrolle an zwei runden Stirnseiten in Seitenbereichen der Wickelrolle drehbar lagern. Bei Rolloanordnungen mit mehr als einer Wickelrolle ist vorzugsweise entsprechend jeder Wickelrolle ein Paar Lagerelemente zugeordnet.

Vorzugsweise bestehen der standardisierte Abschnitt und der fahrzeugspezifische Abschnitt im Wesentlichen aus einem Spritzgussteil, und sind diese vorzugsweise aus einem Kunststoff gespritzt.

Bei dem erfindungsgemäßen Verfahren weist der fahrzeugspezifische Abschnitt eine Aufnahme zur Lagerung der Wickelwelle auf, und wird durch die Auswahl des fahrzeugspezifischen Abschnitts entsprechend eines bestimmten Fahrzeugmodells die fahrzeugspezifische Positionierung der Wickelwelle relativ zur Fahrzeugkarosserie festgelegt.

Vorzugsweise wird zunächst der fahrzeugspezifische Abschnitt mit dem standardisierten Abschnitt kombiniert, wobei die beiden Abschnitte auch mit weiteren Bauteilen kombiniert werden können, um ein fahrzeugspezifisches Lagerelement zu erhalten. Dieses fahrzeugspezifische Lagerelement wird dann an einer Führungsschiene oder an einem Rahmenteil der Rolloanordnung (oder eines Dachmoduls, welches die Rolloanordnung beinhaltet) montiert. Eine entsprechende Rolloanordnung kann so vormontiert an einen Fahrzeughersteller geliefert werden, und ist bereits an das vorgesehene Fahrzeugmodell angepasst, ohne dass das gesamte Lagerelement bereits als fahrzeugspezifisches Lagerelement hergestellt, beispielsweise spritzgegossen sein muss, da wie bereits erläutert, jedes fahrzeugspezifische Lagerelement aus einem standardisierten Abschnitt und einem fahrzeugspezifischen Abschnitt aufgebaut ist.

Im Folgenden wird die Erfindung anhand der beigefügten Figuren beispielhaft näher erläutert. Dabei zeigt:
Fig. 1 eine perspektivische Ansicht auf ein erfindungsgemäßes Lagerelement;
Fig. 2 eine Seitenansicht auf das Lagerelement der Fig. 1; und
Fig. 3 eine Ansicht von oben auf das Lagerelement der Fig. 1.

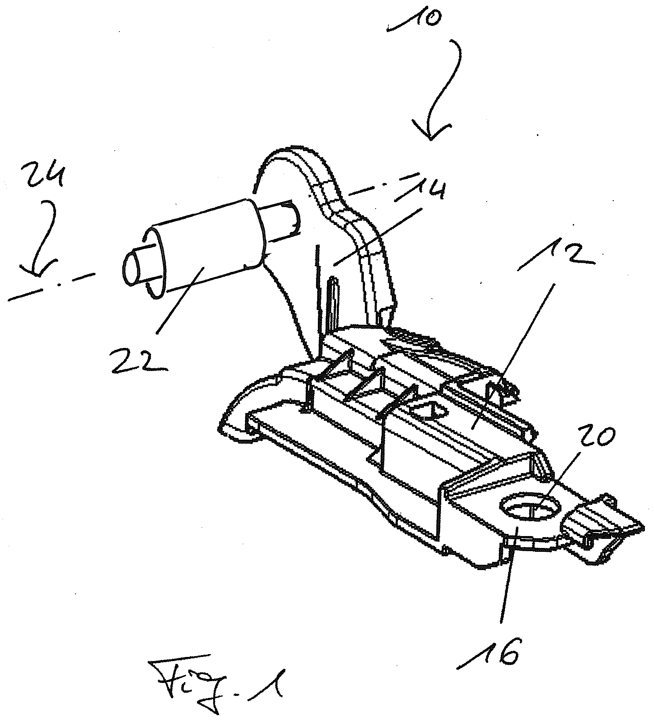

Fig. 1 zeigt ein Lagerelement 10 gemäß der vorliegenden Erfindung. Das Lagerelement 10 dient der Lagerung einer nicht näher dargestellten Wickelrolle, wozu das Lagerelement 10 einen Lagerzapfen 22 aufweist, der drehbar am

Lagerelement 10 angeordnet und dazu ausgebildet ist, in eine Wickelrolle einzugreifen, um diese drehbar zu lagern. Dabei kann der Lagerzapfen 22 in eine entsprechende Öffnung in einer Stirnfläche der Wickelrolle eingreifen und der Lagerzapfen 22 ist im Wesentlichen entlang einer Rotationsachse 24 der Wickelrolle ausgerichtet, wobei die Rotationsachse der Wickelrolle durch eine Mittenachse des Lagerzapfens verläuft.

Gemäß der vorliegenden Erfindung weist das Lagerelement 10 einen standardisierten Abschnitt 12 auf, welcher mit einem fahrzeugspezifischen Abschnitt 14 verbunden ist. Mittels des standardisierten Abschnitts 12 kann das Lagerelement 10 an einer nicht dargestellten Führungsschiene oder an einem ebenfalls nicht dargestellten Rahmen angeordnet werden. Der standardisierte Abschnitt 12 weist hierzu einen Anbindungsabschnitt 16 auf, in welchem eine Öffnung 20 vorgesehen ist, um eine Schraubverbindung oder eine Nietverbindung mit der Führungsschiene bzw. dem Rahmenseitenteil auszuführen. Sowohl der standardisierte Abschnitt 12 als auch der fahrzeugspezifische Abschnitt 14 des Lagerelements 10 sind als Spritzgussteile, vorzugsweise als Kunststoffspritzgussteile ausgeführt. Das Rahmenseitenteil bzw. die Führungsschiene, an welcher das Lagerelement 10 über den Anbindungsabschnitt 16 befestigt wird, ist entlang eines Seitenbereichs einer Öffnung in einer Fahrzeugkarosserie angeordnet. Im montierten Zustand trägt das Lagerelement 10 eine Wickelrolle, auf die eine Rollobahn aufgewickelt und von dieser abrollbar ist, um eine Öffnung in der Fahrzeugkarosserie zu beschatten, wobei die Öffnung vorzugsweise mit einem transparenten Deckel fest verschlossen ist oder bei einer Ausführungsform mit einem verlagerbaren Deckel wahlweise öffenbar oder verschließbar ausgestaltet ist.

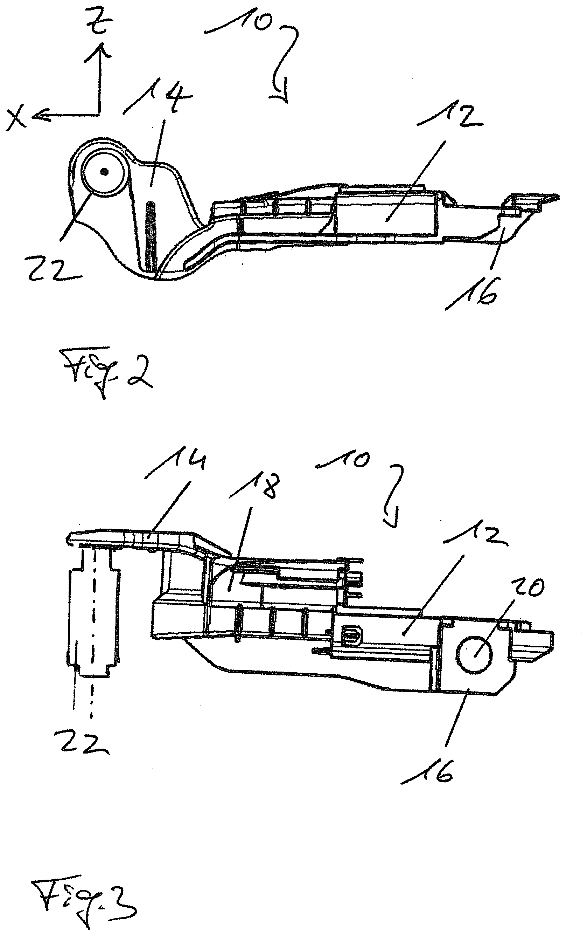

Die Figuren 2 und 3 zeigen das Lagerelement 10 der Fig. 1 in einer Seitenansicht und in einer Ansicht von oben. Entsprechend der vorliegenden Erfindung sind der standardisierte Abschnitt 12 des Lagerelements 10 und der fahrzeugspezifische Abschnitt 14 in einem Verbindungsbereich 18 miteinander verbunden (siehe Ansicht von oben der Fig. 3). Das Lagerelement 10 ist also mindestens zweiteilig ausgeführt, weist also vorzugsweise noch weitere Teile auf, wie den Lagerzapfen 22, der als separates Bauteil im fahrzeugspezifischen Abschnitt 14 des Lagerelements 10 drehbar gelagert ist.

In der Seitenansicht der Fig. 2 ist eine Fahrzeuglängsrichtung mit dem Richtungspfeil x bezeichnet, und eine vertikale Richtung (senkrecht zum Fahrzeugdach) mit dem Richtungspfeil z. In der dargestellten Ausführungsform wird eine nicht dargestellte Rollobahn entgegen der Fahrtrichtung x nach hinten von der Wickelwelle abgewickelt. Je nach Fahrzeugmodell oder Ausstattungsvariante eines bestimmten Fahrzeugmodells gibt es dabei eine optimale Position für die Wickelrolle und damit für den Lagerzapfen 22 in x- und z-Richtung. Die Positionierung in z-Richtung erfolgt dabei unter Berücksichtigung des vorhandenen Bauraums für den Einbau der Rolloanordnung in die Fahrzeugkarosserie, wobei beispielsweise, um die Kopffreiheit zu erhöhen, der Lagerzapfen 22 möglichst weit in z-Richtung nach oben verschoben angeordnet wird, damit der zur Verfügung stehende Bauraum optimal ausgenutzt wird. Die Positionierung des Lagerzapfens 22 in x-Richtung wird so gewählt, dass ein optimaler Abstand relativ zur seitlichen Führungsschiene der Rolloanordnung erzielt wird. Diese Anforderungen führen dazu, dass für jedes Fahrzeugmodell eine spezifische Positionierung des Lagerzapfens 22 in z- und x-Richtung vorgenommen werden muss. Um zu vermeiden, dass für jedes unterschiedliche Fahrzeugmodell ein komplettes Lagerelement 10 entwickelt und hergestellt werden muss (und mit ihm die entsprechenden Formwerkzeuge), ist der standardisierte Abschnitt 12 des Lagerelements 10 so ausgeführt, dass er bei verschiedenen Fahrzeugmodellen verwendet werden kann, während die genaue Positionierung in x- und z-Richtung des Lagerzapfens 22 durch den fahrzeugspezifischen Abschnitt 14 erreicht wird. Da der fahrzeugspezifische Abschnitt 14 des Lagerelements 10 wesentlich weniger komplex als das gesamte Lagerelement 10 ausgebildet ist, führt dies zu einer wesentlichen Kostenreduzierung, da zur Anpassung auf ein anderes Fahrzeugmodell lediglich der fahrzeugspezifische Abschnitt 14 verändert werden muss. Der fahrzeugspezifische Abschnitt 14 des Lagerelements 10 dient somit als adaptives Element des Lagerelements 10.

Wie bereits erläutert, sind der standardisierte Abschnitt 12 des Lagerelements 10 und der fahrzeugspezifische Abschnitt 14 im Verbindungsbereich 18 miteinander verbunden. Die Verbindung kann dabei mittels eines Verrastens, eines Verschraubens, eines Vernietens oder eines Verklebens ausgeführt sein.

Beim Zusammenbau der Rolloanordnung kann entweder zunächst der standardisierte Abschnitt 12 mit dem fahrzeugspezifischen Abschnitt 14 verbunden und erst im verbundenen Zustand an einem Rahmenseitenteil oder einer Führungsschiene der Rolloanordnung angeordnet werden. Alternativ kann auch zuerst der standardisierte Abschnitt an der Führungsschiene oder am Rahmenseitenteil angeordnet werden und zu einer späteren Zeitpunkt der fahrzeugspezifische Abschnitt 14 zusammen mit dem Lagerzapfen 22 und eventuell sogar mit der bereits aufgesteckten Wickelrolle zusammen mit der Rollobahn am standardisierten Abschnitt 12 des Lagerelements 10 angeordnet werden. Prinzipiell wäre es auch möglich, dass auf einem standardisierten Abschnitt, der bereits am Fahrzeug montiert ist, nachträglich der fahrzeugspezifische Abschnitt 14 zusammen mit der Wickelrolle, die am Lagerzapfen 22 angeordnet ist, und der Rollobahn, befestigt wird.

### Bezugszeichenliste

- 10: Lagerelement
- 12: standardisierter Abschnitt von 10
- 14: fahrzeugspezifischer Abschnitt von 10
- 16: Anbindungsabschnitt
- 18: Verbindungsbereich
- 20: Öffnung
- 22: Lagerzapfen
- 24: Rotationsachse

## Patentansprüche

1. Verfahren zum Zusammenbau einer Rolloanordnung für eine Fahrzeugkarosserie und / oder zur Montage einer solchen an einer Fahrzeugkarosserie, wobei die Rolloanordnung zum Beschatten einer Öffnung in der Fahrzeugkarosserie vorgesehen ist, und eine auf einer Wickelrolle aufrollbare Rollobahn aufweist, sowie mindestens ein Lagerelement (10) zur drehbaren Lagerung der Wickelrolle an der Fahrzeugkarosserie,
wobei das Lagerelement (10) folgendes aufweist:
einen standardisierten Abschnitt (12), der zur Verwendung für mehrere unterschiedliche Fahrzeugmodelle ausgebildet ist, sowie
einen fahrzeugspezifischen Abschnitt (14), der zur Verwendung an einem bestimmten der unterschiedlichen Fahrzeugmodelle ausgebildet ist, wobei der fahrzeugspezifische Abschnitt (14) eine Aufnahme zur Lagerung der Wickelrolle aufweist, und die Aufnahme die fahrzeugspezifische Positionierung der Wickelwelle relativ zur Fahrzeugkarosserie festlegt, und ferner das Lagerelement (10) mindestens zweiteilig ausgeführt ist mit dem standardisierten Abschnitt (12) als erstem Teil und dem fahrzeugspezifischen Abschnitt (14), als zweitem Teil,
wobei im Zuge des Verfahrens:
der fahrzeugspezifische Abschnitt (14) entsprechend dem bestimmten Fahrzeugmodell ausgewählt, und
mit dem standardisierten Abschnitt (12) kombiniert wird.

2. Verfahren nach Anspruch 1, **dadurch gekennzeichnet, dass** der fahrzeugspezifische Abschnitt (14) eine Aufnahme zur Lagerung der Wickelrolle aufweist, und durch die Auswahl des fahrzeugspezifischen Abschnitts entsprechend dem bestimmten Fahrzeugmodell die fahrzeugspezifische Positionierung der Wickelwelle relativ zur Fahrzeugkarosserie festlegt wird.

3. Verfahren nach Anspruch 1 oder 2, **dadurch gekennzeichnet, dass** zunächst der fahrzeugspezifische Abschnitt (14) mit dem standardisierten Abschnitt (12) kombiniert wird, um ein fahrzeugspezifisches Lagerelement (10) zu erhalten und später das Lagerelement an einer Führungsschiene oder an einem Rahmenseitenteil der Rolloanordnung montiert wird.

4. Verfahren nach einem der vorhergehenden Ansprüche, **dadurch gekennzeichnet, dass** die Aufnahme zur Lagerung der Wickelrolle einen Lagerzapfen (22) aufweist, der in eine Öffnung an einer Stirnseite der Wickelwelle eingreift, und die Wickelwelle auf dem Lagerzapfen oder zusammen mit diesem drehbar gelagert ist.

5. Verfahren nach einem der vorhergehenden Ansprüche, **dadurch gekennzeichnet, dass** der standardisierte Abschnitt (12) an einer Führungsschiene zur seitlichen Führung der Rollobahn anordbar ist, und der fahrzeugspezifische Abschnitt (14) an einer der Führungsschiene in horizontaler Richtung abgewandten Seite des standardisierten Abschnitts an diesem angeordnet ist.

6. Verfahren nach einem der vorhergehenden Ansprüche, **dadurch gekennzeichnet, dass** der standardisierte Abschnitt (12) an einem Rahmenseitenteil eines rechteckigen Rahmens der Rolloanordnung anordbar ist, wobei der Rahmen dafür vorgesehen ist, eine Öffnung in der Fahrzeugkarosserie mindestens teilweise zu umgeben, und der fahrzeugspezifische Abschnitt (14) an einer dem Rahmenseitenteil in horizontaler Richtung abgewandten Seite des standardisierten Abschnitts an diesem angeordnet ist.

7. Verfahren nach einem der vorhergehenden Ansprüche, **dadurch gekennzeichnet, dass** die Rolloanordnung zwei Lagerelemente (10) aufweist.

8. Verfahren nach einem der vorhergehenden Ansprüche, **dadurch gekennzeichnet, dass** der standardisierte und / oder der fahrzeugspezifische Abschnitt (12, 14) im Wesentlichen aus einem Spritzgussteil besteht, vorzugsweise aus einem Kunststoffspritzgussteil.

9. Verfahren nach einem der vorhergehenden Ansprüche, **dadurch gekennzeichnet, dass** der standardisierte Abschnitt (12) und der fahrzeugspezifischen Abschnitt (14) in einem Verbindungsbereich (18) miteinander verbunden sind.

## Claims

1. Method for assembling a roller blind assembly for a vehicle body and/or for installing such a roller blind assembly on a vehicle body, wherein the roller blind assembly is provided for shading an opening in the vehicle body and has a roller blind web which can be rolled up on a winding roller, and at least one bearing element (10) for the rotatable mounting of the winding roller on the vehicle body,
wherein the bearing element (10) has the following:
a standardized section (12) which is designed to be used for a plurality of different vehicle models, and
a vehicle-specific section (14) which is designed to be used on one specific model of the different vehicle models, wherein the vehicle-specific section (14) has a receptacle for the mounting of the winding roller, and the receptacle determines the vehicle-specific positioning of the winding shaft relative to the vehicle body, and, furthermore, the bearing element (10) is designed in at least two parts with the standardized section (12) as first part and with the vehicle-specific section (14) as second part,
wherein, during the method:
the vehicle-specific section (14) is selected corresponding to the specific vehicle module, and is combined with the standardized section (12).

2. Method according to Claim 1, **characterized in that** the vehicle-specific section (14) has a receptacle for the mounting of the winding roller, and, by selecting the vehicle-specific section in accordance with the specific vehicle model, the vehicle-specific positioning of the winding shaft relative to the vehicle body is determined.

3. Method according to Claim 1 or 2, **characterized in that** first of all the vehicle-specific section (14) is combined with the standardized section (12) in order to obtain a vehicle-specific bearing element (10), and the bearing element is subsequently mounted on a guide rail or on a frame side part of the roller blind assembly.

4. Method according to one of the preceding claims, **characterized in that** the receptacle for the mounting of the winding roller has a bearing pin (22) which engages in an opening on an end side of the winding shaft, and the winding shaft is mounted rotatably on the bearing pin or together with the latter.

5. Method according to one of the preceding claims, **characterized in that** the standardized section (12) can be arranged on a guide rail for laterally guiding the roller blind web, and the vehicle-specific section (14) is arranged on the standardized section, on a side thereof which faces away from the guide rail in the horizontal direction.

6. Method according to one of the preceding claims, **characterized in that** the standardized section (12) can be arranged on a frame side part of a rectangular frame of the roller blind assembly, wherein the frame is provided to at least partially surround an opening in the vehicle body, and the vehicle-specific section (14) is arranged on the standardized section, on a side thereof which faces away from the frame side part in the horizontal direction.

7. Method according to one of the preceding claims, **characterized in that** the roller blind assembly has two bearing elements (10).

8. Method according to one of the preceding claims, **characterized in that** the standardized and/or the vehicle-specific section (12, 14) is substantially composed of an injection moulded part, preferably of a plastics injection moulded part.

9. Method according to one of the preceding claims, **characterized in that** the standardized section (12) and the vehicle-specific section (14) are connected to each other in a connecting region (18).

## Revendications

1. Procédé d'assemblage d'un système de store pour une carrosserie de véhicule et/ou pour le montage d'un tel arbre sur une carrosserie de véhicule, le système de store étant prévu pour ombrager une ouverture dans la carrosserie de véhicule, et présentant une bande de store pouvant être enroulée sur un mandrin d'enroulement, ainsi qu'au moins un élément formant palier (10) pour loger en rotation le mandrin d'enroulement sur la carrosserie de véhicule,
l'élément formant palier (10) présentant :
une section standardisée (12) qui est réalisée pour une utilisation pour plusieurs modèles de véhicule différents, ainsi que
une section spécifique au véhicule (14) qui est réalisée pour une utilisation sur un modèle déterminé parmi les différents modèles de véhicule, dans lequel la section spécifique au véhicule (14) présente un logement pour loger le mandrin d'enroulement, et le logement définit le positionnement spécifique au véhicule de l'arbre d'enroulement par rapport à la carrosserie de véhicule, et en outre l'élément formant palier (10) est réalisé au moins en deux parties avec la section standardisée (12) comme première partie et la section spécifique au véhicule (14) comme deuxième partie,
dans lequel, dans le cadre du procédé :
la section spécifique au véhicule (14) est sélectionnée selon le modèle de véhicule déterminé, et
est combinée avec la section standardisée (12).

2. Procédé selon la revendication 1, **caractérisé en ce que** la section spécifique au véhicule (14) présente un logement pour loger le mandrin d'enroulement, et la sélection de la section spécifique au véhicule selon le modèle de véhicule déterminé définit le positionnement spécifique au véhicule de l'arbre d'enroulement par rapport à la carrosserie de véhicule.

3. Procédé selon la revendication 1 ou 2, **caractérisé en ce que** d'abord la section spécifique au véhicule (14) est combinée avec la section standardisée (12) pour obtenir un élément formant palier (10) spécifique au véhicule, et ultérieurement, l'élément formant palier est monté sur un rail de guidage ou sur une partie latérale de cadre du système de store.

4. Procédé selon l'une quelconque des revendications précédentes, **caractérisé en ce que** le logement permettant de loger le mandrin d'enroulement présente un tourillon (22) qui vient en prise dans une ouverture sur une face frontale de l'arbre d'enroulement, et l'arbre d'enroulement est logé sur le tourillon ou est logé de manière à pouvoir tourner avec celui-ci.

5. Procédé selon l'une quelconque des revendications précédentes, **caractérisé en ce que** la section standardisée (12) peut être disposée sur un rail de guidage pour un guidage latéral de la bande de store, et la section spécifique au véhicule (14) est disposée sur la section standardisée sur un côté de celle-ci qui est détourné du rail de guidage dans la direction horizontale.

6. Procédé selon l'une quelconque des revendications précédentes, **caractérisé en ce que** la section standardisée (12) peut être disposée sur une partie latérale de cadre d'un cadre rectangulaire du système de store, le cadre étant prévu pour entourer au moins partiellement une ouverture dans la carrosserie de véhicule, et la section spécifique au véhicule (14) étant disposée sur la section standardisée sur un côté de celle-ci qui est détourné de la partie latérale de cadre dans la direction horizontale.

7. Procédé selon l'une quelconque des revendications précédentes, **caractérisé en ce que** le système de store présente deux éléments formant palier (10).

8. Procédé selon l'une quelconque des revendications précédentes, **caractérisé en ce que** la section standardisée et/ou la section spécifique au véhicule (12, 14) est/sont composée(s) substantiellement d'une pièce moulée par injection, de préférence d'une pièce moulée par injection de matière plastique.

9. Procédé selon l'une quelconque des revendications précédentes, **caractérisé en ce que** la section standardisée (12) et la section spécifique au véhicule (14) sont reliées l'une à l'autre dans une zone de connexion (18).
